Europäisches Patentamt

(19) European Patent Office

Office européen des brevets

(11) Veröffentlichungsnummer: **0 057 838**
B1

(12) **EUROPÄISCHE PATENTSCHRIFT**

(45) Veröffentlichungstag der Patentschrift:
27.03.85

(21) Anmeldenummer: 82100429.8

(22) Anmeldetag: 22.01.82

(51) Int. Cl.⁴: **C 08 L 75/04,** C 08 G 18/08,
C 08 G 18/48, C 08 J 3/02,
A 61 G 7/04, B 68 G 11/04

(54) Gel-Polster, Verfahren zu deren Herstellung und deren Verwendung.

(30) Priorität: 03.02.81 DE 3103564

(43) Veröffentlichungstag der Anmeldung:
18.08.82 Patentblatt 82/33

(45) Bekanntmachung des Hinweises auf die Patenterteilung:
27.03.85 Patentblatt 85/13

(84) Benannte Vertragsstaaten:
AT BE CH DE FR GB IT LI NL SE

(56) Entgegenhaltungen:
DE - A - 2 347 299
DE - C - 1 168 075

(73) Patentinhaber: BAYER AG, Konzernverwaltung RP
Patentabteilung, D-5090 Leverkusen 1 Bayerwerk (DE)

(72) Erfinder: Burgdörfer, Hans-Heribert, Dr., Goffineweg 49,
D-5000 Köln 80 (DE)
Erfinder: Schäpel, Dietmar, Dr., Johanniterstrasse 15,
D-5000 Köln 80 (DE)
Erfinder: Schneider, Gottfried, Dr., Paul-Klee-Strasse 62,
D-5090 Leverkusen 1 (DE)
Erfinder: von Bonin, Wulf, Dr., Mendelssohn Strasse 30,
D-5090 Leverkusen 1 (DE)
Erfinder: von Gizycki, Ulrich, Dr., Wiembachallee 24,
D-5090 Leverkusen 3 (DE)

## Beschreibung

Die vorliegende Erfindung betrifft neuartige Gel-Polster zur Vermeidung von Dekubitus, ein Verfahren zu ihrer Herstellung sowie ihre Verwendung als Matratzen, Matratzeneinlagen, Rollstuhlkissen und Auflagen für Automobilsitze.

Gel-Polster zur Vermeidung von Dekubitus sind an sich bekannt. So wird beispielsweise in der amerikanischen Patentschrift 3 737 930 ein Polster mit einem flexiblen, elastischen Kern aus einem PVC-Gel beschrieben. PVC-Gele mit ausreichenden Reißfestigkeiten lassen sich jedoch nur in verhältnismäßig hohen Härten einstellen. Der Auflagendruck bei daraufliegenden oder sitzenden Personen läßt sich daher nur ungenügend verteilen. Dekubitus wird auf diese Weise nur unzureichend vermieden. Nachteilig bei derartigen Gelen ist außerdem der hohe Gehalt an Weichmachern, die an die Oberfläche des Gels migrieren können und auf diese Weise von den daraufliegenden bzw. sitzenden Personen aufgenommen werden können. In ähnlicher Weise können Restmonomere des PVC's, von denen bekannt ist, daß sie toxikologisch nicht unbedenklich sind, freigesetzt werden.

In der britischen Patentschrift 1 541 071 werden ebenfalls Polster zur Vermeidung von Dekubitus beschrieben. Diese Polster enthalten ein thixotropes Gel aus wäßrigen Lösungen von 3%—7% Magnesiumsilikat. Diese Gele sind allerdings so wenig dimensionsstabil, daß sie nur innerhalb eines festen Rahmens angewendet werden können. Solche Rahmen verursachen häufig ihrerseits wiederum Druckstellen, wodurch hier erneut die Gefahr von Dekubitus gegeben ist.

Die US-Patentschrift 3 663 973 beschreibt ein Polster aus Polyorganosiloxan-Gel zur Verhütung von Drucknekrosen bei Säugetieren. Die verwendeten Polyorganosiloxane sind jedoch verhältnismäßig teure Materialien; es ist daher nur mit erheblichem Kostenaufwand möglich, Antidekubitus-Polster auf dieser Basis herzustellen.

In der deutschen Auslegeschrift 2 347 299 wird die Verwendung von wasser- und/oder alkoholhaltigen Polyurethanharnstoff-Gelen als Polsterelemente oder stoßabwehrende Teile beschrieben. Die dort beschriebenen und beanspruchten Gele enthalten jedoch beträchtliche Mengen an Wasser und/oder niedermolekularen Alkoholen. Diese Substanzen sind verhältnismäßig leicht flüchtig, was bei längerer Lagerung zum Austrocknen und Verhärten dieser Gele führt. Dieser Effekt tritt auch auf, wenn man die Gele mit einer elastischen Folie umhüllt, da die Gas- und Wasserdampfdurchlässigkeit der bekannten elastischen Folien nicht ausreicht, um den beschriebenen Effekt, Abgabe der flüchtigen Komponenten, vollkommen verhindern zu können. Die in der deutschen Auslegeschrift 2 347 299 beschriebenen Gele haben daher als Polsterelemente nur begrenzte Lagerfähigkeit.

Ein ähnliches Verfahren zur Herstellung von Polstermaterialien wird in der japanischen Patentanmeldung 55-3404 beschrieben. Die Herstellung der Polstermaterialien erfolgt auch hier durch Umsetzung eines NCO-Präpolymers mit einem stöchiometrischen Überschuß an Wasser. Die nach dieser Lehre hergestellten Polstermaterialien geben aber ebenfalls relativ rasch wieder Wasser ab, wodurch sie austrocknen und ihre Ausgangseigenschaften verlieren. Dieser Prozeß läßt sich ebenfalls durch einen Folienüberzug nicht vollständig verhindern, weshalb auch diese Polstermaterialien nur eine begrenzte Lebensdauer haben. Nachteilig an diesen Materialien ist außerdem ihre durch den Wasseranteil bedingte hohe spezifische Wärme. Da die Körperwärme von Patienten beim Kontakt mit diesen Materialien sehr rasch abgeführt wird, erzeugen sie bei der Verwendung als Polstermaterialien ein unangenehmes und medizinisch unerwünschtes Kältegefühl.

Ein weiterer Nachteil der bekannten Gel-Polster zur Vermeidung von Dekubitus ist, daß die dort verwendeten Gele in ihren Eigenschaften wenig variierbar sind. Es ist deshalb schwierig, ihr Eigenschaftsbild an den jeweilig erforderlichen Anwendungszweck optimal anzupassen.

Es wurde nun gefunden, daß man Gel-Polster zur Vermeidung von Dekubitus, die die erwähnten Nachteile nicht aufweisen, weich und trotzdem elastisch sind und deren mechanische Eigenschaften in weiten Grenzen variierbar sind, herstellen kann, wenn man Polyurethan-Gele auf Basis von Polyolen des Molekulargewichtsbereiches 1000—12 000 und Polyisocyanaten mit einer flexiblen, elastischen Umhüllung versieht. Der Ausdruck Gel soll dabei mehr die physikalische Beschaffenheit des gelee- oder gallertartigen Endproduktes beschreiben, als den exakten polymerphysikalischen Aufbau entsprechend den heuten Ansichten der Kolloidchemie über diesen Zustand wiedergeben. Dabei soll aber nicht ausgeschlossen werden, daß die neuartigen Gele in manchen Fällen den gleichen homogenen Aufbau besitzen, wie man ihn heute den Gelen allgemein zuschreibt, d. h., daß durch zusätzliche oder überschüssige Polyole des Molekulargewichtsbereiches 1000—12 000 gequollene, mehr oder weniger stark verzweigte Polymernetzwerke aus Polyurethan vorliegen.

Als Polyurethan-Gele auf Basis von Polyolen des Molekulargewichtsbereiches 1000—12 000 und Polyisocyanaten im Sinne der vorliegenden Erfindung werden solche Materialien gelartiger Konsistenz bezeichnet, die ein oder mehrere Polyole des Molekulargewichtsbereiches 1000—12 000 als kohärentes Dispersionsmittel enthalten, in dem ein polymeres, über Urethanbindungen kovalent verknüpftes Netzwerk dispergiert ist, das ebenfalls Kohärenz zeigt.

Gegenstand der vorliegenden Erfindung sind demnach Gel-Polster zur Vermeidung von Dekubitus, die als Matratzen, Matratzeneinlagen, Rollstuhlkissen, Automobilsitze und für Polstermöbel verwendet werden können, bestehend aus einem Gel, das mit einer flexiblen, elastischen Umhüllung versehen ist, dadurch gekennzeichnet, daß das Gel aus

2

(1) 15—62 Gew.-%, bevorzugt 20—57 Gew.-%, besonders bevorzugt 25—47 Gew.-%, bezogen auf die Summe aus (1) und (2), einer hochmolekularen Matrix und

(2) 85—38 Gew.-%, bevorzugt 80- 43 Gew.-%, besonders bevorzugt 75— 53 Gew. %, bezogen auf die Summe aus (1) und (2), eines in der Matrix durch Nebenvalenzkräfte fest gebundenen flüssigen Dispersionsmittels sowie gegebenenfalls

(3) 0—100 Gew.-%, bezogen auf die Summe aus (1) und (2), an Füll- und/oder Zusatzstoffen, aufgebaut ist, wobei

    a) die hochmolekulare Matrix ein kovalent vernetztes Polyurethan und

    b) das flüssige Dispersionsmittel eine oder mehrere Polyhydroxylverbindungen mit einem Molekulargewicht zwischen 1000 und 12 000, vorzugsweise zwischen 1700 und 6000, und einer OH-Zahl zwischen 20 und 112, vorzugsweise zwischen 28 und 84, besonders bevorzugt zwischen 30 und 56 ist, wobei das Dispersionsmittel im wesentlichen keine Hydroxylverbindungen mit einem Molekulargewicht unter 800, vorzugsweise unter 1000, enthält,

wobei das Produkt der Funktionalitäten der polyurethanbildenden Komponenten mindestens 52 beträgt und die Isocyanatkennzahl zwischen 15 und 60 liegt.

Wie gefunden wurde, entstehen nur dann erfindungsgemäß brauchbare, elastische Gele, die aus einer kovalent vernetzten Polyurethanmatrix und einem darin fest (d. h. ohne die Gefahr eines störenden Ausschwitzens) gebundenen Polyol aufgebaut sind, wenn die miteinander reagierenden Isocyanat- bzw. Polyolkomponenten eine gewisse Mindestfunktionalität aufweisen und wenn das Polyol im wesentlichen frei von Anteilen mit einer OH-Zahl von mehr als 112 bzw. einem Molekulargewicht unterhalb von 1000 ist.

Die erfindungsgemäß zu verwendenden Gele können, wie schon erwähnt, überraschenderweise durch direkte Umsetzung von Polyisocyanaten mit den genannten höhermolekularen Polyhydroxylverbindungen in einem Isocyanatkennzahlbereich von ca. 15 bis 60, vorzugsweise 20 bis 55, besonders bevorzugt 25 bis 45, hergestellt werden, sofern die polyurethanbildenden Komponenten (Isocyanat und Hydroxylverbindung) zusammen polyfunktionell sind. Anderenfalls entstehen keine Gele, sondern die aus der Polyurethanchemie an sich bekannten flüssigen OH-Präpolymere.

Im allgemeinen müssen die polyurethanbildenden Komponenten um so höherfunktionell sein, je niedriger die Isocyanatkennzahl liegt, wobei es überraschenderweise im wesentlichen gleichgültig ist, ob das eingesetzte Polyol primäre oder sekundäre OH-Gruppen aufweist. Im Falle der Verwendung von Gemischen von Polyolen mit primären und sekundären OH-Gruppen ist zu beachten, daß die primären Polyhydroxylverbindungen bevorzugt mit der Isocyanatkomponente reagieren, so daß unter »Funktionalität der Polyolkomponente« dann im wesentlichen die OH-Funktionalität des primären Polyols zu verstehen ist. Zur Berechnung der Isocyanatkennzahl soll im Sinne der vorliegenden Erfindung jedoch jeweils die Gesamtmenge der Polyolkomponente herangezogen werden.

Bei der Herstellung der Polyurethanmatrix soll das Produkt aus Isocyanat-Funktionalität und wie oben beschrieben zu berechnender Polyol-Funktionalität mindestens 5,2, vorzugsweise mindestens 6,2, insbesondere mindestens 8, besonders bevorzugt mindestens 10, betragen.

Der genannte Minimalwert von 5,2 wird im erfindungsgemäß obersten Kennzahlbereich (ca. 60) erreicht, wenn man als Polyolkomponente ein Gemisch aus etwa äquivalenten Mengen an primärer und sekundärer Hydroxylverbindung einsetzt, so daß der Anteil an Polyolkomponente mit primären OH-Gruppen praktisch quantitativ abreagiert. Im Falle einer Isocyanatkennzahl von 50 und rein primärer oder sekundärer Polyolkomponente sollte das Produkt der Funktionalitäten mindestens 6,2, vorzugsweise 8, betragen; im Falle einer Isocyanatkennzahl von 30 und rein primärer oder sekundärer Polyolkomponente mindestens 9, vorzugsweise mindestens 10. Näheres ist in dieser Hinsicht den Ausführungsbeispielen zu entnehmen.

Gegenstand der vorliegenden Erfindung ist somit auch ein Verfahren zur Herstellung von Gel-Polstern, welches dadurch gekennzeichnet ist, daß man eine Mischung aus

a) einem oder mehreren Polyisocyanaten,

b) einer oder mehrerer Polyhydroxylverbindungen mit einem Molekulargewicht zwischen 1000 und 12 000, vorzugsweise zwischen 1700 und 6000, und einer OH-Zahl zwischen 20 und 112, vorzugsweise zwischen 28 und 84, besonders bevorzugt zwischen 30 und 56,

c) gegebenenfalls Katalysatoren für die Reaktion zwischen Isocyanat- und Hydroxylgruppen sowie gegebenenfalls

d) aus der Polyurethanchemie an sich bekannten Füll- und Zusatzstoffen,

wobei diese Mischung im wesentlichen frei ist an Hydroxylverbindungen mit einem Molekulargewicht unter 800, vorzugsweise unter 1000, die Isocyanatkennzahl zwischen 15 und 60 liegt und das Produkt der Funktionalitäten der polyurethanbildenden Komponenten mindestens 5,2, vorzugsweise mindestens 6,2, insbesondere mindestens 8, besonders bevorzugt mindestens 10, beträgt, gelieren läßt und das Gel in an sich bekannter Weise mit einer flexiblen, elastischen Umhüllung versieht.

Es ist besonders überraschend, daß die erfindungsgemäßen Gele außerordentlich stabil sind. Auch nach längerer Lagerung tritt keine wesentliche Phasentrennung ein. Das Dispersionsmittel Polyol ist also sehr fest im Gel gebunden. Durch geeignete Auswahl der Mischungspartner können Gele erhalten werden, bei denen eine Abgabe des Dispersionsmittels auch bei Temperaturen von 50—100° C nicht erfolgt. Infolge der Unlöslichkeit in DMF kann man davon ausgehen, daß die Polymerketten in den erfindungsgemäßen Gelen mindestens teilweise kovalent vernetzt sind, während der restliche Teil der Polymerketten über Nebenvalenzkräfte und mechanische Verschlaufungen gebunden ist.

Das bzw. die Polyole erfüllen, wie erläutert, neben ihrer Funktion als Aufbaukomponente für die Polyurethanmatrix zusätzlich noch die Rolle des Dispersionsmittels. Bei den erfindungsgemäß zu verwendenden höhermolekularen Polyolen handelt es sich vorzugsweise um die in der Polyurethan-chemie an sich bekannten, bei Raumtemperatur flüssigen Polyhydroxy-polyester, -polyether, -polythioether, -polyacetale, -polycarbonate oder -polyesteramide des oben angegebenen Molekulargewichtsbereiches.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäurean-ydrid, Tetrachlorphthalsäureanhydrid, Endomethylentetrahydrophthalsäureanhydrid, Glutarsäurean-ydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiolk-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. $\varepsilon$-Caprolactoan, oder aus Hydroxycarbonsäu-ren, z. B. $\omega$-Hydroxycapronsäure, sind einsetzbar.

Auch die erfindungsgemäß in Frage kommenden, mindestens zwei, in der Regel zwei bis acht, vorzugsweise zwei bis drei Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Ka-talysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen, wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seinen insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischether, Polythioetherester oder Polythioetheresteramide.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z. B. Trioxan (De-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, sind verwendbar.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den obengenannten, Hydroxylgruppen aufweisenden Verbindungen ablaufen läßt. Derartige Verfahren sind beispielsweise in den DE-Auslegeschriften 1 168 075 und 1 260 142 sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Gele von besonderer Flammwidrigkeit.

Vertreter der genannten, erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54, und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben. Selbstverständlich können Mischungen der obengenannten Verbindungen, z. B. Mischungen von Polyethern und Polyestern, eingesetzt werden.

Bevorzugt werden erfindungsgemäß die in der Polyurethan-Chemie an sich bekannten Polyhydroxypolyether der genannten Art mit 2 bis 4, besonders bevorzugt 3 Hydroxylgruppen pro Molekül als höhermolekulares Polyol eingesetzt. Besonders bevorzugt sind dabei, gegebenenfalls als Abmischkomponente mit anderen Polyethern, solche, die zumindest endständig Ethylenoxideinheiten und damit primäre Hydroxylgruppen aufweisen. Der Anteil an Ethylenoxidsequenzen im Polyether beträgt dabei vorzugsweise mindestens 15 Gew.-%, besonders bevorzugt mindestens 20 Gew.-%.

Für die Herstellung der erfindungsgemäßen Gele werden ferner aliphatische, cycloaliphatische, araliphatische, aromatische und heterocyclische Polyisocyanate eingesetzt, wie sie z. B. von W. Siefken in Justus Liebigs Annalen der Chemie, 562, Seiten 75 bis 136, beschrieben werden, beispielsweise solche der Formel

$$Q\,(NCO)_n$$

in der

m = 2—4, vorzugsweise 2, und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen, oder
einen araliphatischen Kohlenwasserstoffrest mit 8—15, vorzugsweise 8—13 C-Atomen,

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage:
Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 277 138, beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Isocyanate sind z. B. das 2,4- und 2,6-Toluylendiisocyanat sowie beliebige Gemische dieser Isomeren, Polyphenyl-polymethylen-polyisocyanate, wie sie durch Anilin-Formaldehyd-Kondensation und anschließende Phosgenierung hergestellt werden und Carbodiimidgruppen, Urethangruppen, Allophanatgruppen, Isocyanatgruppen, Harnstoffgruppen oder Biuretgruppen aufweisende Polyisocyanate.

Besonders bevorzugte Polyisocyanate sind z. B. biuretisiertes oder trimerisiertes 1,6-Hexamethylendiisocyanat sowie NCO-Gruppen-haltige Anlagerungsprodukte an kurz- oder langkettige Polyole sowie Mischungen dieser Isocyanate.

Der Gehalt an Di- und/oder Polyisocyanaten in den erfindungsgemäßen gelbildenden Mischungen beträgt 1—20 Gew.-%, vorzugsweise 2—15 Gew.-%, bezogen auf das Gesamtgewicht der Mischung.

Die an sich langsam ablaufende Gelbildungsreaktion kann durch Zusatz von Katalysatoren beschleunigt werden. Dabei können die an sich bekannten, die Reaktion zwischen Hydroxyl- und Isocyanatgruppen beschleunigenden Katalysatoren verwendet werden, z. B. tertiäre Amine, wie Triethylamin, Tributylamin, N-Methyl-morpholin, N-Ethyl-morpholin, N-Cocomorpholin, N,N,N′,N′-Tetramethyl-ethylendiamin, 1,4-Diaza-bicyclo-(2,2,2)-octan, N-Methyl-N′-dimethylaminoethyl-piperazin, N,N-Dimethylbenzylamin, Bis-(N,N-diethylaminoethyl)-adipat, N,N-Dimethylbenzylamin, Pentamethyldiethylentriamin, N,N-Dimethylcyclohexylamin, N,N,N′,N′-Tetramethyl-1,3-butandiamin, N,N-Dimethyl-$\beta$-phenylethylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketonen, wie Aceton, Methylethylketon oder Cyclohexanon, und Phenolen, wie Phenol, Nonylphenol oder Bisphenol, in Frage.

Als Katalysatoren koimmen ferner Silaamine mit Kohlenstoff-Silizium-Bindungen, wie sie z. B. in der deutschen Patentschrift 1 229 290 (entsprechend der amerikanischen Patentschrift 3 620 984) beschrieben ist, in Frage, z. B. 2,2,4-Trimethyl-2-silamorpholin und 1,3-Diethyl-aminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden. Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z. B. Dibutylzinnoxid, Dibutylzinnchlorid, Dibutylzinnacetat, Dibutylzinndilaurat, Dibutylzinnmaleat oder Dioctylzinnacetat in Betracht. Selbstverständlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch Band VII, herausgegeben von Vieweg und Höchtlen, Carl-Hanser-Verlag, München 1966, z. B. auf den Seiten 96—102 beschrieben.

Die Katalysatoren werden vorzugsweise in einer Menge zwischen 0,1 bis 10 Gew.-%, bezogen auf das Gesamtgewicht des Gels, eingesetzt.

Als in den erfindungsgemäßen Gelen gegebenenfalls enthaltene Füll- und Zusatzstoffe sind die in der Polyurethan-Chemie an sich bekannten Stoffe zu verstehen, wie z. B. Füllstoffe und Kurzfasern auf organischer oder anorganischer Basis, Metallpulver, färbende Agentien wie Farbstoffe und Farbpigmente, wasserbindende Mittel, oberflächenaktive Substanzen, Flammschutzmittel oder flüssige Streckmittel, wie Substanzen mit einem Siedepunkt von über 150° C, sowie Weichmachungsmittel, wie sie üblicherweise Polymeren wie Polyvinylchlorid zur Härteverringerung zugesetzt werden.

Als anorganische Füllstoffe seien z. B. Schwerspat, Kreide, Gips, Kieserit, Soda, Titandioxid, Quarzsand, Kaolin, Ruß und Mikroglaskugeln genannt. Von den organischen Füllstoffen können z. B. Pulver auf Basis von Polystyrol, Polyvinylchlorid, Harnstoff-Formaldehyd und Polyhydrazodicarbonamid (z. B. aus Hydrazin/Toluylendiisocyanat) eingesetzt werden. Dabei können z. B. das Harnstoff-Formaldehydharz oder das Polyhydrazodicarbonamid direkt in dem für die Gelbildung zu verwendenden Polyol, wie z. B. Polyether, hergestellt worden sein.

Als Kurzfasern kommen z. B. Glasfasern von 0,1—1 cm Länge oder Fasern organischer Herkunft, wie z. B. Polyester- oder Polyamidfasern, infrage. Metallpulver, wie z. B. Eisen- oder Kupferpulver, können ebenfalls bei der Gelbildung mitverwendet werden. Um den erfindungsgemäßen Gelen die gewünschte Färbung zu verleihen, können die bei der Einfärbung von Polyurethanen an sich bekannten Farbstoffe oder Farbpigmente auf organischer oder anorganischer Basis verwendet werden, wie z. B. Eisenoxid- oder Chromoxidpigmente, Pigmente auf Phthalocyanin- oder Monoazo-Basis. Das bevorzugte wasserbindende Mittel ist Zeolith. Als oberflächenaktive Substanzen seien z. B. Cellulosepulver, Aktivkohle, Kieselsäurepräparate und Chrysotil-Asbest genannt.

Als Flammschutzmittel können z. B. Natrium-polymetaphosphate zugesetzt werden. Als flüssige Streckmittel können beispielsweise alkyl-, alkoxy- oder halogensubstituierte aromatische Verbindungen wie Dodecylbenzol, m-Dipropoxylbenzol oder o-Dichlorbenzol, halogenierte aliphatische Verbindungen wie chlorierte Paraffine, organische Carbonate wie Propylencarbonat, Carbonsäureester wie Dioctylphthalat oder Dodecylsulfonsäureester oder organische Phosphorverbindungen, wie Trikresylphosphat, verwendet werden.

Als Weichmachermittel seien beispielsweise Ester von mehrwertigen, vorzugsweise zweiwertigen, Carbonsäuren mit einwertigen Alkoholen genannt. Beispiele für solche Polycarbonsäuren sind: Bernsteinsäure, Isophthalsäure, Trimellitsäure, Phthalsäureanhydrid, Tetra- und Hexahydrophthalsäureanhydrid, Endomethylentetrahydrophthalsäureanhydrid, Glutarsäureanhydrid, Maleinsäureanhydrid, Fumarsäure, dimere und trimere Fettsäuren wie Ölsäure, gegebenenfalls in Mischung mit monomeren Fettsäuren. Als einwertige Alkohole kommen verzweigte und unverzweigte aliphatische Alkohole mit 1—20 Kohlenstoffatomen, wie Methanol, Ethanol, Propanol, Isopropanol, n-Butanol, sek.-Butanol, tert.-Butanol, die verschiedenen Isomeren des Pentylalkohols, Hexylalkohols, Octylalkohols (z. B. 2-Ethyl-Hexanol), Nonylalkohols, Decyclalkohols, Laurylalkohols, Myristylalkohols, Cetylalkohols, Stearylalkohols sowie die natürlich vorkommenden oder durch Hydrierung natürlich vorkommender Carbonsäuren erhältlichen Fett- und Wachsalkohole in Frage. Cycloaliphatische Alkohole sind beispielsweise Cyclohexanol und dessen Homologe. Einsetzbar sind auch aromatische Hydroxylverbindungen wie Phenol, Kresol, Thymol, Carvacrol, Benzylalkohol und Phenylethanol.

Als Weichmachermittel kommen weiter Ester der obengenannten verzweigten und unverzweigten aliphatischen, cycloaliphatischen und aromatischen Alkohole mit Phosphorsäure in Frage. Gegebenenfalls können auch Phosphorsäureester mit halogenierten Alkoholen, z. B. Trichlorethylphosphat, eingesetzt werden. In diesem Fall kann noch eine zusätzliche flammhemmende Ausrüstung der erfindungsgemäßen Gele erzielt werden. Selbstverständlich können auch gemischte Ester der obengenannten Alkohole und Carbonsäuren eingesetzt werden.

Auch sogenannte polymere Weichmacher können verwendet werden. Solche handelsüblichen polymeren Weichmacher sind z. B. Polyester der Adipin-, Sebacin- oder Phthalsäure.

Weiter sind Alkylsulfonsäureester des Phenols, z. B. Paraffinsulfonsäurephenylester, als Weichmachungsmittel verwendbar.

Der Gehalt an Füllstoffen, Streckmitteln und/oder Weichmachungsmittel in den erfindungsgemäß zu verwendenden Gelen kann bis zu 50 Gew.-%, bezogen auf das Gesamtgewicht des Gels, betragen.

Die Umsetzung zur Herstellung der erfindungsgemäß verwendeten Polyurethan-Gele erfolgt vorzugsweise bei Raumtemperatur. Zur Erhöhung der Reaktionsgeschwindigkeit kann jedoch die Reaktionstemperatur bis auf 100°C gesteigert werden. Eine weitere Erhöhung der Reaktionstemperatur ist zwar möglich, aber wenig sinnvoll, da die dann sehr rasch einsetzende Reaktion eine Handhabung der erfindungsgemäßen gelbildenden Masse erschwert, wobei die Gefahr der Bildung von Inhomogenitäten gegeben ist.

Wenn andererseits aus bestimmten Gründen eine nur langsam ablaufende Gelreaktion gewünscht wird, kann die Reaktionstemperatur in beliebiger Weise bis zum Stockpunkt der Reaktionskomponenten gesenkt werden. In den meisten Fällen wird jedoch bei einer Temperatur von 0°C bereits eine genügend langsame Reaktion erzielt.

Die Herstellung der erfindungsgemäß zu verwendenden Gele kann auf verschiedene Weise erfolgen.

Man kann nach dem one-shot- oder den Prepolymer-Verfahren arbeiten. Beim one-shot-Verfahren werden alle Komponenten, d. h. Polyole, Di- und/oder Polyisocyanate, Katalysator und gegebenenfalls Füll- und Zusatzstoffe auf einmal zusammengegeben und intensiv miteinander vermischt.

Beim Prepolymer-Verfahren sind zwei Arbeitsweisen möglich. Entweder stellt man zunächst ein Isocyanat-Prepolymer her, indem man einen entsprechenden Anteil der Polyolmenge mit der gesamten, für die Gelbildung vorgesehenen Isocyanatmenge umsetzt, und fügt dann dem erhaltenen Prepolymer die restliche Menge an Polyol sowie gegebenenfalls Füll- und Zusatzstoffen zu und mischt intensiv. Oder man setzt die gesamte, für die Gelbildung vorgesehene Menge an Polyol mit einem Teil der Isocyanatmenge zu einem Hydroxyl-Prepolymer um und mischt anschließend die restliche Menge an Isocyanat zu.

Eine erfindungsgemäß besonders vorteilhafte Arbeitsweise ist eine Variante aus dem one-shot-Verfahren und dem Hydroxyl-Prepolymer-Verfahren. Hierbei werden das Polyol bzw. Polyolgemisch,

7

gegebenenfalls die Füll- und Zusatzstoffe, der Katalysator und zwei verschiedene Diisocyanate in einem Schuß zusammengegeben und intensiv vermischt, wobei ein Diisocyanat aromatischer und ein Diisocyanat aliphatischer Basis ist. Man kann davon ausgehen, daß durch die stark unterschiedliche Reaktivität der beiden Diisocyanate zunächst ein Hydroxylprepolymer entsteht, das sodann innerhalb von Minuten mit dem anderen Diisocyanat unter Gelbildung reagiert. Es werden Gele mit besonders hoher Zähigkeit erhalten.

Bei diesen Verfahrensweisen kann die Förderung, Dosierung und Mischung der Einzelkomponenten oder Komponentengemischen mit den für den Fachmann in der Polyurethan-Chemie an sich bekannten Vorrichtungen erfolgen.

Für den Fachmann besonders überraschend ist es, daß auch bei relativ niedrigen Isocyanatkennzahlen (z. B. 30) und einer Polyolkomponente mit einheitlich reaktiven OH-Gruppen (so daß keine selektive Reaktion eines Teils der Polyolkomponente mit dem Polyisocyanat zu erwarten ist) Gele mit einer hochmolekularen, vernetzten, in DMF unlöslichen Matrix und nicht bloß durch Urethangruppen modifizierte flüssige Polyole (OH-Präpolymere) erhalten werden.

Die erfindungsgemäß verwendeten Gele sind im ausgehärteten Zustand formbeständige, deformierbar elastische Körper. Die Konsistenz läßt sich durch Wahl der Ausgangskomponenten und deren Einsatzmengen in weiten Grenzen variieren. Bevorzugt werden jedoch solche Gele eingesetzt, die eine weiche, etwas klebrige, gallertartige Konsistenz besitzen. Diese Konsistenz wird mit den beschriebenen Ausgangskomponenten und Einsatzmengen erreicht. Nach Aufhören der deformierenden Kraft gehen die erfindungsgemäß verwendeten Gele in ihren Ausgangszustand zurück.

Die Eigenschaft der erfindungsgemäß verwendeten Gele, unter Druck zu deformieren, macht sie besonders geeignet für ihren Einsatz als Dekubitus verhindernde Polster.

Nach der allgemeingültigen Lehrmeinung in der Medizin wird Dekubitus unter anderem dann hervorgerufen, wenn der Auflagedruck einzelner Körperpartien den kapillaren Druck längere Zeit übersteigt und es dadurch bedingt zu einer Störung im Hautstoffwechsel kommt. Insbesondere bei bettlägerigen und vor allem bei bewegungsunfähigen Patienten wird dieser Zustand bereits nach relativ kurzer Zeit erreicht.

Die erfindungsgemäßen Polster sind nun in der Lage, unter dem Auflagedruck einer darauf liegenden, sitzenden oder stehenden Person sich so zu verformen, daß die entsprechende Körperpartie so umflossen wird, daß der betreffende Körperteil praktisch im kohärenten Dispersionsmittel schwimmt. Auf diese Weise wird der Auflagedruck gleichmäßig über die gesamte Berührungsfläche verteilt und insbesondere an hervorstehenden Körperteilen so weit reduziert, daß die Störung des Hautstoffwechsels wesentlich reduziert wird. Man kann daher die Gefahr von Dekubitus wesentlich verringern, wenn man bettlägerige und bewegungsunfähige Patienten auf die erfindungsgemäßen Gelpolster bettet oder setzt.

Die erfindungsgemäß verwendeten Gele haben eine weiche, etwas klebrige, gallertartige Konsistenz. Zur besseren Handhabbarkeit dieser Gele als Auflagedruck verteilende Polster ist es erforderlich, sie mit einer Umhüllung zu versehen. Die Umhüllung muß dabei so ausgebildet sein, daß sie der Deformationsneigung des Gels unter Druck möglichst geringen Widerstand entgegensetzt.

Erfindungsgemäß können als Umhüllung elastische Folien verwendet werden. Insbesondere haben sich alle Polymerfolien mit gutem zähelastischen Verhalten (gemessen beispielsweise im biaxialen Durchstoßversuch nach DIN 55 373) und hoher Reißdehnung und Reißkraft (gemessen beispielsweise nach DIN 53 455) bewährt.

Solche Folien sind beispielsweise Polyurethanfolien, wie sie z. B. unter dem Handelsnamen Waloplast® PUR von der Fa. Wolff-Walsrode oder Platilon® von der Fa. Plate angeboten werden. Geeignete Folien können auch aus thermoplastischen Polyesterelastomeren, z. B. dem Hytrel® der Fa. DuPont sowie aus auf Styrol und Butadien basierenden Blockcopolymerisaten, gegebenenfalls in Abmischung mit Polyolefinen, hergestellt werden. Geeignete, auf Styrol basierende Blockcopolymere sind beispielsweise die unter dem Handelsnamen Cariflex® von der Fa. Shell angebotenen Produkte. Geeignet sind außerdem Styrol-Ethylen-Butylen-Styrol-Blockcopolymere. Solche Blockcopolymere werden z. B. von der Fa. Shell unter dem Handelsnamen Kraton® angeboten. Geeignete Folien sind weiterhin solche aus Ethylen-Vinylacetat-Polymeren, gegebenenfalls im Verbund mit anderen Polymerfolien, sowie dünne Filme aus natürlichen oder synthetischen Kautschukmaterialien. Auch die Verwendung von Folien aus weichgemachtem Polyvinylchlorid ist möglich.

Diese Folien lassen sich thermisch verformen, schweißen oder kleben. Es ist daher besonders einfach, mit Hilfe dieser Techniken aus diesen Folien geeignete Bezüge für die erfindungsgemäßen Gel-Polster herzustellen.

In einer besonderen Ausführungsform können auch Bezüge hergestellt werden, indem auf tiefgezogene Artikel aus diesen Folien eine Deckfolien aufgeschweißt oder aufgeklebt wird oder zwei tiefgezogene Halbschalen aus diesen Folien aneinandergeklebt oder geschweißt werden.

Als besonders geeignet haben sich auch beschichtete elastische textile Flächengebilde, wie Gewebe, Gewirke, Gestricke oder Vliese aus natürlichen oder synthetischen organischen oder anorganischen Fasermaterialien mit elastischem Charakter, mit hoher Reißdehnung und Reißkraft (nach DIN 53 455) erwiesen.

Besonders geeignete Beschichtungen sind elastische Polyurethanbeschichtungen, wie sie z. B. von

**0 057 838**

der BAYER AG unter der Bezeichnung Impranil® angeboten werden. Es ist jedoch auch möglich, Beschichtungen auf Basis von weichgemachtem Polyvinylchlorid einzusetzen.

Diese beschichteten textilen Flächengebilde lassen sich vernähen, kleben oder schweißen. Es ist daher besonders einfach, mit Hilfe dieser Techniken aus diesen beschichteten textilen Flächengebilden geeignete Bezüge für die erfindungsgemäßen Gel-Polster herzustellen.

Die Umhüllung der erfindungsgemäß verwendeten Gele kann auch erfolgen, indem man ein elastisches Material in flüssiger oder gelöster Form auf die Geloberfläche aufträgt und dort erstarren oder eine andere filmbildende Reaktion eingehen läßt. Als besonders geeignet haben sich hier Beschichtungsmaterialien auf Polyurethanbasis, wie sie beispielsweise von der BAYER AG unter dem Namen Impranil® angeboten werden, erwiesen, die in Lösung oder als Dispersion auf die erfindungsgemäß verwendeten Gele aufgebracht werden und nach Abziehen des Lösungs- bzw. Dispersionsmittels eine geeignete elastische Umhüllung ergeben. Geeignete flexible Umhüllungen werden auch erhalten, wenn man die Gele mit einem ein Polyurethan bildenden Zweikomponentenlack überzieht.

Die Herstellung der Gel-Polster kann auf verschiedene Weise erfolgen. So kann man beispielsweise zunächst das Gel ähnlich der in der deutschen Offenlegungsschrift 2 347 299 beschriebenen Weise in einer Form herstellen und das nach Ausreaktion druckfeste Gel mit einer flexiblen Folie oder einem flexiblen Stoff umhüllen oder lackieren bzw. beschichten. Es ist aber auch möglich, die Gelkomponenten über einen statischen Mischer zu mischen, die Mischung auf ein kontinuierlich arbeitendes Förderband zu geben und dort die Mischung ausreagieren zu lassen. Auf diese Weise werden verhältnismäßig große Gelscheiben erhalten, die in Stücke jeder gewünschten Größe geschnitten werden können, die dann einzeln mit einer Umhüllung versehen bzw. lackiert oder beschichtet werden.

Die Herstellung der Gel-Polster kann aber auch nach einer besonders bevorzugten, sehr einfachen Verfahrensweise erfolgen. Dabei werden die zur Herstellung des Gels erforderlichen Komponenten über einen statischen oder dynamischen Mischer gemischt und die Mischung direkt in einen Bezug aus elastischer, flexibler Folie bzw. elastischem, beschichtetem textilem Flächengebilde gegossen. Nach Zugabe der Mischung wird der Bezug dicht verschlossen und das Polster zur Gelbildung sich selbst überlassen. Gegebenenfalls kann auch das Polster in der Umhüllung während der Gelbildung zwischen zwei planparallelen Platten bzw. in eine geeignete Form gebracht werden, wodurch ein Gel-Polster mit im wesentlichen paralleler Ober- und Unterseite entsteht, bzw. das Gel-Polster eine Gestalt entsprechend der Innenseite der Form annimmt. Je nach Art der Reaktionskomponenten, zugegebenen Katalysatoren und Temperaturführung beträgt die Gelzeit ca. 5 Min. bis ungefähr 24 Stunden.

Diese besonders bevorzugte Verfahrensweise erlaubt die Herstellung von Gel-Polstern beliebiger Größe und Form in einfacher Weise dadurch, daß man die Polsterhüllen in allgemein bekannter Weise in der entsprechenden Form herstellt und mit der gelbildenden Masse füllt. Besonders bevorzugte Formen und Größen sind jedoch quadratische und rechteckige Kissen mit einer Kantenlänge von 30—60 cm sowie rechteckige Polster, die in den Abmessungen einer herkömmlichen Matratze von 80—100 cm Breite und 180—200 cm Länge entsprechen.

Die Dicke der erfindungsgemäßen Gel-Polster kann ebenfalls in weiten Grenzen variiert werden. Es hat sich jedoch gezeigt, daß bei der Anwendung als Sitzkissen, bei der meist ein quadratisches Kissen mit einer Kantenlänge von 40—60 cm bevorzugt wird, mit einer Dicke von mehr als 2 cm die besten Ergebnisse erzielt werden. Bei der Anwendung als Matratze oder Matratzeneinlage kann auch ein Gel-Polster geringerer Dicke verwendet werden, da bei liegenden Personen der Auflagedruck auf eine größere Körperfläche verteilt wird.

Die erfindungsgemäßen Gel-Polster sind in besonderer Weise geeignet, für eine gleichmäßige Druckverteilung im Bereich der Auflagefläche bei sitzenden oder liegenden Personen zu sorgen, wodurch Druckspitzen an Körpervorsprüngen, wie sie beispielsweise bei Polstern aus Schaumstoffen auftreten, weitgehend vermieden werden. Die in den Beispielen angegebenen Druckwerte wurden zwischen den Kreuzbein- bzw. Sitzbeinvorsprüngen eines künstlichen, aus Kunststoff geformten und mit 35 kg belasteten Gesäßes und einem auf einer ebenen, harten Auflage liegenden Gel-Polster bzw. Schaumstoff-Polster gemessen. Die hierbei auftretende Belastung entspricht in etwa derjenigen, die eine sitzende Person auf das Polster ausüben würde. Die Druckwerte sind relative Druckeinheiten, deren Absolutwerte auch noch zusätzlich von der Meßapparatur bestimmt werden. Sie sollen lediglich dazu dienen, die erfindungsgemäßen Gel-Polster mit herkömmlichen Matratzenschaumstoffen zu vergleichen.

Die folgenden Beispiele erläutern die vorliegende Erfindung. In den Beispielen sind Mengenangaben als Gewichtsprozente bzw. Gewichtsteile zu verstehen, sofern nichts anderes angegeben ist.

## Beispiel 1

3500 Teile eines Polyethers auf der Basis von Trimethylolpropan mit einer Hydroxylzahl von 56, hergestellt aus 45% Propylenoxid und 55% Ethylenoxid, 700 Teile eines Polyethers auf der Basis von Trimethylolpropan mit einer Hydroxylzahl von 34, hergestellt aus 83% Propylenoxid und 17% Ethylenoxid und 2800 Teile eines Polyethers auf der Basis von Propylenglykol mit einer Hydroxylzahl von 56,

9

hergestellt aus 100% Propylenoxid, werden bei einer Temperatur von 22°C mittels eines Labormischers mit Rührscheibe zu einer klaren Lösung verrührt. Zu dieser Lösung werden 301 Teile eines Biuretpolyisocyanats mit einem Isocyanatgehalt von 21 Gew.-%, einer mittleren Funktionalität von 3,6 und einem mittleren Molekulargewicht von 700, das durch Biuretisierungsreaktion aus Hexamethylendiisocyanat hergestellt wurde (Desmodur N® der BAYER AG) unter Rühren zugegeben und gut verteilt. Zu der nun trüben Lösung werden 105 Teile Dibutyl-zinn-dilaurat zugegeben und die Mischung 3 Minuten intensiv vermischt. Die weißlich trübe Lösung wird in eine vorbereitete, quadratische Umhüllung aus Polyurethanfolie der Folienstärke 0,2 mm mit einer Kantenlänge von 45 cm gegossen und die Folienhülle luftdicht verschweißt. Das so vorgefertigte Gel-Polster wird auf eine ebene Unterlage gelegt und zur Gelreaktion sich selbst überlassen, wodurch das Gel-Polster seine mechanische Endfestigkeit erreicht und vollbelastet werden kann. Es ist ein weicher, formbeständiger, unter Druck deformierbarer Körper. Wird die deformierende Kraft aufgehoben, geht das Gel-Polster in seinen Ausgangszustand zurück.

Bei einer Belastung mit einem künstlichen, aus Kunststoff geformten und mit 35 kg belasteten Gesäß wird am Kreuzbein ein Druck von 44 Druckeinheiten (DE) und an den Sitzbeinvorsprüngen ein Druck von 48 DE gemessen.

### Beispiel 2 (Vergleichsbeispiel)

Ein Schaumstoffpolster aus einem handelsüblichen Polyetherschaumstoff mit einem Raumgewicht nach DIN 53 420 von 35 kg/m$^3$ und einer Stauchhärte (40%) nach DIN 53 571 von 3,3 KPa, wie er üblicherweise für die Herstellung von Polsterelementen und Matratzen verwendet wird, wird mit einer Folienumhüllung aus Polyurethanfolie, wie sie in Beispiel 1 verwendet wird, versehen. Das so umhüllte Polster wird analog Beispiel 1 mit einem künstlichen Gesäß belastet. Dabei wird am Kreuzbein ein Druck von 109 DE und an den Sitzbeinvorsprüngen ein Druck von 34 DE gemessen.

### Beispiel 3

Nach der in Beispiel 1 beschriebenen Arbeitsweise wird eine gelbildende Mischung hergestellt und analog Beispiel 1 in eine quadratische Umhüllung aus elastischer Folie gegossen. Die Umhüllung wird jedoch anstatt aus Polyurethanfolie aus einer 0,2 mm starken Folie aus einem Polymerblend aus 50 Teilen Polypropylen und 50 Teilen eines Styrol-Butadien-Blockcopolymers gefertigt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird.

Das auf diese Weise erhaltene Gel-Polster wird analog Beispiel 1 mit einem künstlichen Gesäß belastet. Dabei wird am Kreuzbein ein Druck von 18 DE und an den Sitzbeinvorsprüngen ein Druck von 19 DE gemessen.

### Beispiel 4

Nach der in Beispiel 1 beschriebenen Arbeitsweise wird eine gelbildende Mischung hergestellt und analog Beispiel 1 in eine quadratische Umhüllung gegossen. Die Umhüllung wird anstatt aus Polyurethanfolie aus einem mit einer elastischen Polyurethanbeschichtung versehenen elastischen Textil, wie es beispielsweise zur Herstellung von Miederwaren oder Badebekleidung allgemein üblich und bekannt ist, gefertigt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird. Das auf diese Weise erhaltene Gel-Polster wird analog Beispiel 1 mit einem künstlichen Gesäß belastet. Dabei wird an dem Kreuzbeinvorsprung ein Druck von 32 DE und an den Sitzbeinvorsprüngen ein Druck von 28 DE gemessen.

### Beispiel 5

3500 Teile eines Polyethers auf das Basis von Trimethylolpropan mit einer Hydroxylzahl von 56, hergestellt aus 45% Propylenoxid und 55% Ethylenoxid, 700 Teile eines Polyethers auf der Basis von Trimethylolpropan mit einer Hydroxylzahl von 34, hergestellt aus 83% Propylenoxid und 17% Ethylenoxid, 2800 Teile eines Polyethers auf der Basis von Propylenglykol mit einer Hydroxylzahl von 56, hergestellt aus 100% Propylenoxid, und 35 Teile Dibutyl-zinn-dilaurat werden in einem Rührkessel bei 22°C homogen gemischt. Die Mischung wird mittels einer Zahnradpumpe einem statischen Mischer zugeführt. Aus einem getrennten Vorratsbehälter werden diesem Mischer mittels einer weiteren Zahnradpumpe gleichzeitig 273 Teile des Biuretpolyisocyanats aus Beispiel 1 so zugeführt, daß zu jeder Zeit das Mischungsverhältnis der beiden Komponenten gleich ist und dem Verhältnis der Gesamtmengen entspricht.

Die aus dem statischen Mischer ausfließende weißliche trübe Lösung wird in eine quadratische Umhüllung, wie sie in Beispiel 4 beschrieben wurde, gegossen und daraus, wie in Beispiel 1 beschrieben, ein Gel-Polster in Form eines Kissens hergestellt.

Nachdem die Gelreaktion abgeschlossen ist, wird ein weiches, formbeständiges, unter Druck deformierbares Gel-Polster erhalten, das nach Deformation in seinen Ausgangszustand zurückkehrt, wenn die deformierende Kraft aufgehoben wird.

Das auf diese Weise erhaltene Gel-Polster wird, wie in Beispiel 1 beschrieben, mit einem künstlichen Gesäß belastet. Dabei werden folgende Druckwerte gemessen: Kreuzbeinvorsprung 31 DE; Sitzbeinvorsprünge 23 DE.

## Beispiel 6

1000 Teile eines Polyethers auf der Basis von Trimethylolpropan mit einer Hydroxylzahl von 36, hergestellt aus 80% Propylenoxid und 20% Ethylenoxid, 50 Teile des Biuretpolyisocyanats aus Beispiel 1 und 15 Teile Dibutyl-zinn-dilaurat werden mit Hilfe eines Laborrührers mit Rührscheibe bei Raumtemperatur innerhalb von 1 Minute intensiv vermischt. Nach 10 Minuten erhält man ein trübes, elastisches, formstabiles Gel, das sich unter dem Einfluß einer darauf wirkenden Kraft leicht deformieren läßt und nach Aufheben der deformierenden Kraft seinen Ausgangszustand wieder einnimmt.

Das Gel eignet sich vorzüglich zur Herstellung der erfindungsgemäßen Gel-Polster.

## Beispiel 7

1000 Teile eines Polyethers auf der Basis von Sorbit mit einer Hydroxylzahl von 46, hergestellt aus 100% Propylenoxid, 25 Teile Toluylendiisocyanat (80% 2,4- und 20% 2,6-Isomeres) und 30 Teile Dibutylzinndilaurat werden mit Hilfe eines Laborrührers mit einer Rührscheibe bei Raumtemperatur innerhalb von 1 Minute intensiv vermischt. Man erhält ein weiches, elastisches, formstabiles Gel, das sich unter dem Einfluß einer darauf wirkenden Kraft leicht deformieren läßt und nach Aufheben der deformierenden Kraft seinen Ausgangszustand wieder einnimmt.

Das Gel eignet sich ebenfalls vorzüglich zur Herstellung der erfindungsgemäßen Gel-Polster.

## Beispiel 8

1000 Teile eines Polyethers gemäß Beispiel 7, 45 Teile 4,4'-Diisocyanatodiphenylmethan, das durch Urethanisierungsreaktion mit Tripropylenglykol modifiziert wurde und einen Isocyanatgehalt von 23 Gew.-% aufweist und 30 Teile Dibutyl-zinn-dilaurat werden mit Hilfe eines Laborrührers gemäß Beispiel 7 umgesetzt. Man erhält ein weiches, elastisches, formstabiles Gel, das sich unter dem Einfluß einer darauf wirkenden Kraft leicht deformieren läßt und nach Aufheben der deformierenden Kraft seinen Ausgangszustand wieder einnimmt.

Das Gel eignet sich ebenfalls zur Herstellung der erfindungsgemäßen Gel-Polster.

## Beispiel 9

1000 Teile eines Polyethers auf der Basis von Glyzerin mit einer Hydroxylzahl von 28, hergestellt aus 40% Propylenoxid und 60% Ethylenoxid werden mit 50 Teilen des Polyisocyanats gemäß Beispiel 8 und 30 Teilen Dibutyl-zinn-dilaurat analog Beispiel 7 zu einem weichen, elastischen, formstabilen Gel, das sich unter dem Einfluß einer darauf wirkenden Kraft leicht verformen läßt und nach Aufheben der deformierenden Kraft seinen Ausgangszustand wieder einnimmt, umgesetzt. Das Gel ist ebenfalls zur Herstellung der erfindungsgemäßen Gel-Polster geeignet.

## Beispiel 10

Das Beispiel zeigt die erfindungsgemäße Mitverwendung von Weichmachungsmitteln. 490 Teile eines Polyethers auf der Basis von Trimethylolpropan und einer Hydroxylzahl von 56, hergestellt aus 45% Propylenoxid und 55% Ethylenoxid, 480 Teile Dibutyladipat, 30 Teile des Isocyanats gemäß Beispiel 1 und 15 Teile Dibutyl-zinn-dilaurat werden gemäß Beispiel 7 zu einem weichen, elastischen, formstabilen Gel umgesetzt, das sich unter dem Einfluß einer darauf wirkenden Kraft leicht deformieren läßt und nach Aufheben der deformierenden Kraft seinen Ausgangszustand wieder einnimmt. Das

0 057 838

Gel kann ebenfalls zur Herstellung der erfindungsgemäßen Gel-Polster verwendet werden.


Beispiel 11

Das Beispiel zeigt ebenfalls die erfindungsgemäße Mitverwendung von Weichmachungsmitteln. 508 Teile eines Polyethers gemäß Beispiel 10, 450 Teile eines Alkylsulfonsäureesters von Phenol, 27 Teile des Polyisocyanats gemäß Beispiel 1 und 15 Teile Dibutyl-zinn-dilaurat werden gemäß Beispiel 7 zu einem weichen, elastischen, formstabilen Gel umgesetzt, das sich unter dem Einfluß einer darauf wirkenden Kraft leicht deformieren läßt und nach Aufheben der deformierenden Kraft seinen Ausgangszustand wieder einnimmt und sich ebenfalls zur Herstellung der erfindungsgemäßen Gel-Polster eignet.


Beispiel 12

484 Teile eines Polyethers gemäß Beispiel 10, 450 Teile Alkylsulfonsäureester von Phenol, 51 Teile des Isocyanats gemäß Beispiel 8 und 15 Teile Dibutyl-zinn-dilaurat werden gemäß Beispiel 7 zu einem weichen, elastischen, formstabilen Gel umgesetzt, das sich unter dem Einfluß einer darauf wirkenden Kraft leicht deformieren läßt und nach Aufheben der deformierenden Kraft seinen Ausgangszustand wieder einnimmt. Das Gel eignet sich ebenfalls zur Herstellung der erfindungsgemäßen Gel-Polster.


**Patentansprüche**

1. Gel-Polster zur Vermeidung von Dekubitus, bestehend aus einem Gel, das mit einer flexiblen, elastischen Umhüllung versehen ist, dadurch gekennzeichnet, daß das Gel aus

(1) 15—62 Gew.-%, bezogen auf die Summe aus (1) und (2), einer hochmolekularen Matrix und
(2) 85—38 Gew.-%, bezogen auf die Summe aus (1) und (2), eines in der Matrix durch Nebenvalenzkräfte fest gebundenen flüssigen Dispersionsmittels, sowie gegebenenfalls
(3) 0—100 Gew.-%, bezogen auf die Summe aus (1) und (2), an Füll- und/oder Zusatzstoffen, aufgebaut ist, wobei
    a)    die hochmolekulare Matrix ein kovalent vernetztes Polyurethan und
    b)    das flüssige Dispersionsmittel eine oder mehrere Polyhydroxylverbindungen mit einem Molekulargewicht zwischen 1000 und 12 000 und einer OH-Zahl zwischen 20 und 112 ist, wobei das Dispersionsmittel im wesentlichen keine Hydroxylverbindungen mit einem Molekulargewicht unter 800 enthält,

wobei das Produkt der Funktionalitäten der polyurethanbildenden Komponenten mindestens 5,2 beträgt und die Isocyanatkennzahl zwischen 15 und 60 liegt.
2. Gel-Polster nach Anspruch 1, dadurch gekennzeichnet, daß das Gel aus 20—57 Gew.-% der hochmolekularen Matrix und 80—43 Gew.-% des flüssigen Dispersionsmittels besteht.
3. Gel-Polster nach Anspruch 1, dadurch gekennzeichnet, daß das Gel aus 25—47 Gew.-% der hochmolekularen Matrix und 75—53 Gew.-% des flüssigen Dispersionsmittels besteht.
4. Gel-Polster nach Anspruch 1 bis 3, dadurch gekennzeichnet, daß die hochmolekulare Matrix des Gels ein Umsetzungsprodukt aus einem oder mehreren Polyisocyanaten und einer oder mehreren Polyhydroxylverbindungen mit einem Molekulargewicht zwischen 1000 und 12 000 und einer OH-Zahl zwischen 20 und 112 ist, wobei das Produkt aus NCO-Funktionalität der Polyisocyanate und OH-Funktionalität der Polyhydroxylverbindungen mindestens 5,2 beträgt.
5. Gel-Polster nach Anspruch 4, dadurch gekennzeichnet, daß das Molekulargewicht der Polyhydroxylverbindungen zwischen 1700 und 6000 und ihre OH-Zahl zwischen 28 und 84 liegt und das Produkt der Funktionalitäten mindestens 6,2 beträgt.
6. Gel-Polster nach Anspruch 1 bis 5, dadurch gekennzeichnet, daß das flüssige Dispersionsmittel des Gels eine oder mehrere Polyhydroxylverbindungen mit einem Molekulargewicht von 1700 bis 6000 und einer OH-Zahl von 28—84 ist.
7. Gel-Polster nach Anspruch 1 bis 6, dadurch gekennzeichnet, daß die Umhüllung aus einer Polymerfolie oder einem beschichteten Textil besteht.
8. Verfahren zur Herstellung eines Gel-Polsters nach Anspruch 1 bis 7, dadurch gekennzeichnet, daß man eine Mischung aus

    a)    einem oder mehreren Polyisocyanaten,
    b)    einer oder mehreren Polyhydroxylverbindungen mit einem Molekulargewicht zwischen 1000 und 12 000, und einer OH-Zahl zwischen 20 und 112,
    c)    gegebenenfalls Katalysatoren für die Reaktion zwischen Isocyanat- und Hydroxylgruppen sowie gegebenenfalls

d) aus der Polyurethanchemie an sich bekannten Füll- und Zusatzstoffen,

wobei diese Mischung im wesentlichen frei ist von Hydroxylverbindungen mit einem Molekulargewicht unter 800, die Isocyanatkennzahl zwischen 15 und 60 liegt und das Produkt der Funktionalitäten der polyurethanbildenden Komponenten mindestens 5,2 beträgt, gelieren läßt und das Gel in an sich bekannter Weise mit einer flexiblen, elastischen Umhüllung versieht.

9. Verwendung der Gel-Polster nach Anspruch 1 bis 8 als Matratze, Matratzeneinlage, Rollstuhlkissen, Automobilsitz bzw. -sitzauflage oder als Polsterelement für Polstermöbel.

## Claims

1. Gel pad for the prevention of decubitus, consisting of a gel which is provided with a flexible, elastic casing, characterised in that the gel is composed of

(1) 15—62% by weight, based on the sum of (1) and (2), of a high molecular weight matrix and
(2) 85—38% by weight, bases on the sum of (1) and (2), of a liquid dispersing agent which is firmly bonded in the matrix by secondary valence forces, and, optionally,
(3) 0—100% by weight, based on the sum of (1) and (2), of fillers and/or additives, wherein
    a) the high molecular weight matrix is a covalently crosslinked polyurethane and
    b) the liquid dispersing agent is one or more polyhydroxyl compounds having a molecular weight between 1,000 and 12,000 and an OH number between 20 and 112, the dispersing agent essentially containing no hydroxyl compounds having a molecular weight below 800,

the product of the functionalities of the polyurethane-forming components being at least 5.2 and the isocyanate index being between 15 and 60.

2. Gel pad according to Claim 1, characterised in that the gel consists of 20—57% by weight of the high molecular weight matrix and 80—43% by weight of the liquid dispersing agent.

3. Gel pad according to Claim 1, characterised in that the gel consists of 25—47% by weight of the high molecularweight matrix and 75—53% by weight of the liquid dispersing agent.

4. Gel pad according to Claim 1 to 3, characterised in that the high molecular weight matrix of the gel is a reaction product of one or more polyisocyanates and one or more polyhydroxyl compounds having a molecular weight between 1,000 and 12,000 and an OH number between 20 and 112, the product of the NCO functionality of the polyisocyanates and the OH functionality of the polyhydroxyl compounds being at least 5.2.

5. Gel pad according to Claim 4, characterised in that the molecular weight of the polyhydroxyl compounds is between 1,700 and 6,000 and their OH number is between 28 and 84 und the product of the functionalities is at least 6.2.

6. Gel pad according to Claim 1 to 5, characterised in that the liquid dispersing agent of the gel is one or more polyhydroxyl compounds having a molecular weight of 1,700 to 6,000 and an OH number of 28—84.

7. Gel pad according to Claim 1 to 6, characterised in that the casing consists of a polymer film or a coated textile.

8. Process for the production of a gel pad according to Claim 1 to 7, characterised in that a mixture of

a) one or more polyisocyanates,
b) one or more polyhydroxyl compounds having a molecular weight between 1,000 and 12,000, and an OH number between 20 and 112,
c) if appropriate, catalysts for the reaction between the isocyanate and hydroxyl groups and, optionally,
d) fillers and additives known per se from polyurethane chemistry,

this mixture being essentially free from hydroxyl compounds having a molecular weight below 800, the isocyanate index being between 15 and 60 and the product of the functionalities of the polyurethane-forming components being at least 5.2, is allowed to gel and the gel is provided with a flexible, elastic casing in a manner known per se.

9. Use of the gel pads according to Claim 1 to 8 as a mattress, mattress insert, wheelchair cushion, motor vehicle seat or motor vehicle seat cushion, or as a padding element for upholstered furniture.

## Revendications

1. Capitonnage de gel servant à éviter le décubitus, consistant en un gel équipé d'une enveloppe flexible et élastique et caractérisé en ce que le gel est constitué de:

(1) 15 à 62% en poids, par rapport à la somme de (1) et (2), d'une gangue macromoléculaire et

(2) 85 à 38% en poids, par rapport à la somme de (1) et (2), d'un milieu de dispersion liquide fixé solidement par des forces de valences secondaires dans la gangue, et, le cas échéant,

(3) 0 à 100% en poids, par rapport à la somme de (1) et (2), de matières de charge et/ou additifs, étant précisé que

a) la gangue macromoléculaire est un polyuréthanne réticulé par des liaisons covalentes et

b) le milieu de dispersion liquide consiste en un ou plusieurs composés polyhydroxylés de poids moléculaire 1000 à 12 000, indice de OH 20 à 112, le milieu de dispersion étant essentiellement exempt de composés hydroxylés de poids moléculaire inférieur à 800,

le produit des fonctionnalités des composants formant le polyuréthanne étant d'au moins 5,2 et l'indice d'isocyanate se situant entre 15 et 60.

2. Capitonnage de gel selon la revendication 1, caractérisé en ce que le gel consiste en 20 à 57% en poids de la gangue macromoléculaire et 80 à 40% en poids du milieu de dispersion liquide.

3. Capitonnage de gel selon la revendication 1, caractérisé en ce que le gel consiste en 25 à 47% en poids de la gangue macromoléculaire et 75 à 53% en poids du milieu de dispersion liquide.

4. Capitonnage de gel selon la revendications 1 à 3, caractérisé en ce que la gangue macromoléculaire du gel est un produit de réaction d'un ou plusieurs polyisocyanates et d'un ou plusieurs composés polyhydroxylés de poids moléculaire 1000 à 12 000, indice de OH 20 à 112, le produit de la fonctionnalité en NCO des polyisocyanates et de la fonctionnalité en OH des composés polyhydroxylés étant d'au moins 5,2.

5. Capitonnage de gel selon la revendication 4, caractérisé en ce que le poids moléculaire des composés polyhydroxylés va de 1700 à 6000, leur indice de OH va de 28 à 84 et le produit des fonctionnalités est d'au moins 6,2.

6. Capitonnage de gel selon la revendications 1 à 5, caractérisé en ce que le milieu de dispersion liquide du gel consiste en un ou plusieurs composés polyhydroxylés de poids moléculaire 1700 à 6000, indice de OH 28 à 84.

7. Capitonnage de gel selon la revendications 1 à 6, caractérisé en ce que l'enveloppe consiste en une feuille de polymère ou en un textile revêtu.

8. Procédé de préparation d'un capitonnage de gel selon les revendications 1 à 7, caractérisé en ce que l'on fait gélifier un mélange de:

a) un ou plusieurs polyisocyanates,

b) un ou plusieurs composés polyhydroxylés de poids moléculaire 1000 à 12 000, indice de OH 20 à 112,

c) le cas échéant, des catalyseurs de la réaction entre les groupes isocyanate et les groupes hydroxy, et, le cas échéant

d) des matières de charge et additifs connus en soi dans la chimie des polyuréthannes,

ce mélange étant essentiellement exempt de composés hydroxylés de poids moléculaire inférieur à 800, l'indice d'isocyanate se situant entre 15 et 60 et le produit des fonctionnalités des composants formant le polyuréthanne étant d'au moins 5,2 et on équipe le gel de manière connue en soi d'une enveloppe flexible élastique.

9. Utilisation des capitonnages de gel selon les revendications 1 à 8 en tant que matelas, garnitures de matelas, coussins de chaises roulantes, sièges d'automobiles ou garnitures de sièges ou en tant qu'éléments de capitonnage pour des meubles capitonnés.